# EUROPEAN PATENT APPLICATION

(11) **EP 2 543 545 A1**
(43) Date of publication of application: **09.01.2013**
(21) Application number: 12172926.3
(22) Date of filing: 21.06.2012
(51) Int. Cl.: B60R 1/02, B60R 1/08

(54) **Mirror for vehicles**

(30) Priority: 06.07.2011 SE 1150637
(71) Applicant: Scania CV AB (publ), 151 87 Södertälje (SE)
(72) Inventor: Jerpdal, Lars, SE-749 62 ÖRSUNDSBRO (SE)

(57) **Abstract**

The invention relates to a mirror device for a vehicle whereby the radius of curvature (r) of the mirror (2) can be altered. A memory metal (4) is situated on the back of the mirror (2) and can be caused to change shape by altering its temperature, e.g. by passing an electric current through it. The change of shape of the mirror (2) may be effected automatically or manually.

## Description

### TECHNICAL FIELD

The invention relates to a mirror whose radius of curvature can be altered to make it possible to set different fields of view. The radius of curvature is altered by using a memory metal. The invention pertains particularly to an outside rearview mirror for heavy vehicles. The invention relates also to a mirror device and a vehicle.

### BACKGROUND

The function of a rearview mirror is to enable the driver of a vehicle to see what is situated and happening behind and alongside the vehicle. A flat mirror cannot reflect the whole region behind the vehicle but the objects visible in such a mirror are undistorted. An alternative is a mirror which is curved to a convex shape so that a larger field of view can be observed, but the objects visible in such a mirror will be distorted and appear to be at different distances than they are actually at. Heavy vehicles, e.g. heavy trucks and works vehicles, often have no inside rearview mirror at the middle of the windscreen such as cars are provided with, so the lateral outside rearview mirrors are the sole means of view rearwards and sideways.

In many countries rearview mirrors must by law have a certain radius of curvature. Within the EU, for example, rearview mirrors are required to comprise a main mirror with a radius of curvature of 1200 mm and a wide-angle mirror with a radius of curvature of 300 mm. The same regulations require front mirrors to have a radius of 200 mm and near-view mirrors a radius of 200 mm. These values have changed over the years and are only to be regarded as examples of radii of curvature. A front mirror is a small mirror device situated in front of the cab and providing a view ahead of the cab. A near-view mirror is a small mirror device situated on the passenger door to provide a view in the region alongside the cab.

These requirements apply only where the vehicle uses public roads. Vehicles used within private premises need not meet the same requirements. For example, when driving in a quarry it may be more important to see objects in the mirror undistorted, but when the vehicle goes out onto public roads the legal requirements have to be complied with. Public roads means not only those owned by the community but also private roads which all kinds of road users are allowed to use, e.g. private roads in residential areas or roads within premises which are owned by companies but are open to the general public. Examples of roads where legal requirements need not be complied with are quarry premises or logging roads in forests which are not intended for general traffic and are therefore not for use by all and sundry.

There are also vehicles which are not registered for use on public roads and therefore need not conform to legal requirements.

Endeavours are made to ensure that vehicle components are as robust and inexpensive as possible and occupy as little space as possible. It is also desirable that those which form part of a vehicle be quick to fit and easy to remove during servicing and repairs.

US1910119 refers to a rearview mirror for vehicles in which the curvature of the mirror can be varied to provide different fields of view. This variation is achieved mechanically by means of a screw situated on the side of the mirror device. The curvature adjustment mechanism occupies space and the mirror has many components. This means increased costs and longer fitting times, both of which are factors which are important to keep down in today's vehicle industry. The more components the mirror device has, the greater also the risk of something disintegrating.

US5233476 refers to a rearview mirror for vehicles in which the curvature of the mirror can be varied to provide different fields of view. The mirror may be fastened on the inside of the windscreen, e.g. by means of suction pads, and the curvature of the mirror may be adjusted by means of a screw situated on the back of the mirror, which complicates access to the adjusting screw in making it necessary to reach between the mirror and the windscreen. This solution also has disadvantages in requiring space for installation and having many components, entailing problems as above.

EP1905645 refers to a rearview mirror for vehicles in which the curvature of the mirror can be varied to provide different fields of view. The mirror's curvature is adjusted mechanically and the specification refers to a number of different ways of achieving this. It also states that control may be exercised electronically but the actual alteration of curvature is still done by mechanical means. This mirror device also has the problems mentioned above.

### OBJECT OF THE INVENTION

An object of the invention is to propose a device which solves the problems of the state of the art. The invention aims in particular at proposing a mirror for vehicles such that its radius of curvature can be varied to provide different fields of view and that the mirror occupies little space, has few components, resulting in low cost and less fitting time, and is easy for the driver to use.

### SUMMARY OF THE INVENTION

These objects are achieved with a mirror for vehicles which is made of flexible material and may have a radius of curvature which it has means for altering. The means for altering the radius of curvature is a memory metal. A memory metal works by changing shape in response to change of temperature. A way of changing the temperature of the memory metal is to cause an electric current to pass through it, which is easy to arrange on a vehicle, since current can be taken from the on-board electrical system. The advantage of using a memory metal to control alteration of the mirror's curvature is that it occupies less space and the alteration is done quickly and is easy to automate.

According to an embodiment of the invention, the memory metal is situated on the back of the mirror. Obscuring the field of view in the mirror is thus avoided and the shape of the memory metal may be chosen freely to achieve optimum change of shape.

According to another embodiment, the mirror is made of plastic material, which is relatively easy to bend without having to apply much force. As memory metals cannot exert enough force, plastic is a suitable material for the mirror. Plastic is also tolerant of impacts and flying stones and weighs less than, for example, glass, which is another usual material for mirrors.

According to a further embodiment of the invention, the alteration of the mirror's curvature may be done manually, enabling the driver to choose when and how much to curve the mirror.

Altering the curvature of the mirror may also be done automatically, reducing the risk of driving on public roads with a mirror which does not meet prevailing legal requirements and does not provide optimum fields of view for such a traffic situation. For example, the mirror may assume a certain radius of curvature if the vehicle travels faster than a certain speed, e.g. 20 km/h. It is also conceivable that the vehicle may be equipped with a GPS or similar device which can monitor the vehicle's location on the planet and control the radius of curvature of the mirror in response to where the vehicle is at the time. It is also conceivable for the vehicle to be equipped with a camera which can assess whether the vehicle is travelling at a location where a certain radius of curvature is required and which can on the basis thereof control the mirror's radius of curvature. The camera may for example recognise road markings or signs to make it possible to decide where the vehicle is at the time.

According to an embodiment, the mirror has a radius of curvature differing from infinity when it is not being acted upon, thereby ensuring that in the event of any fault in the vehicle's electrical system the mirror will be adapted to a field of view appropriate to a general traffic situation and not a situation where only certain vehicles and road users are allowed.

"Mirror" means herein the image-reflecting component, i.e. the component in which an image is seen. "Mirror device" means the component fitted on the vehicle, i.e. the mirror fitted on an adjusting device in a mirror housing and any other components needed for achieving desired functions. "Front" of the mirror means the view-reflecting side which faces the observer. When the mirror is fitted for rear view on a vehicle, "face" means the mirror's surface which faces rearwards in the vehicle's normal direction of movement.

### LIST OF DRAWINGS

Figure 1 depicts schematically a vehicle according to the invention.
Figure 2 depicts schematically a truck cab with an outside rearview mirror according to the invention.
Figure 3 depicts schematically a mirror according to the invention as seen from in front.
Figure 4 depicts schematically a mirror according to the invention as seen from above in an uncurved state.
Figure 5 depicts the mirror in Figure 4 in a curved state.
Figure 6 depicts schematically a mirror according to the invention as seen from behind.
Figure 7 depicts schematically a control unit which controls the mirror's radius of curvature.
Figure 8 depicts schematically a mirror according to the invention with an alternative configuration of the memory metal.

### DETAILED DESCRIPTION OF THE INVENTION

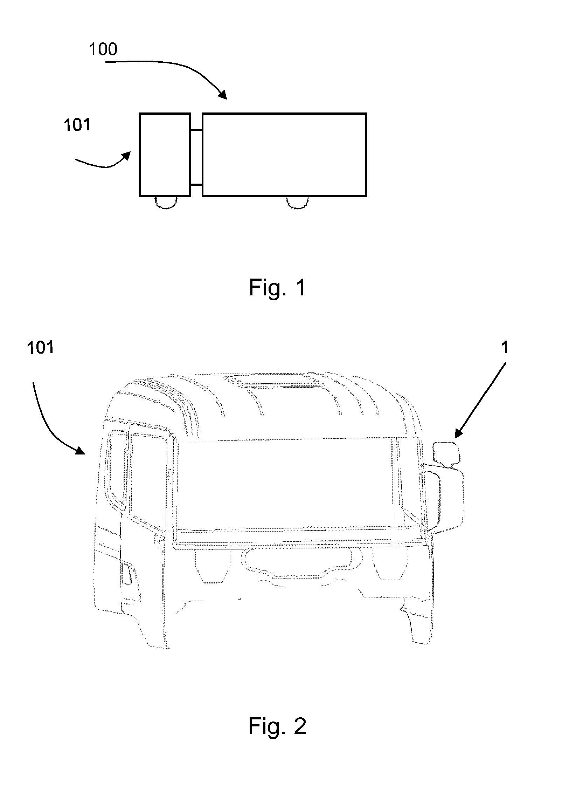

Figure 1 depicts a vehicle 100 with a cab 101. The vehicle depicted is a heavy truck but may also be a works vehicle, a bus or a car. Figure 2 depicts a mirror device 1 according to the invention mounted on the cab 101. The mirror depicted takes the form of a wide-angle mirror on the side of the cab, but the invention is also applicable to other mirrors on the vehicle.

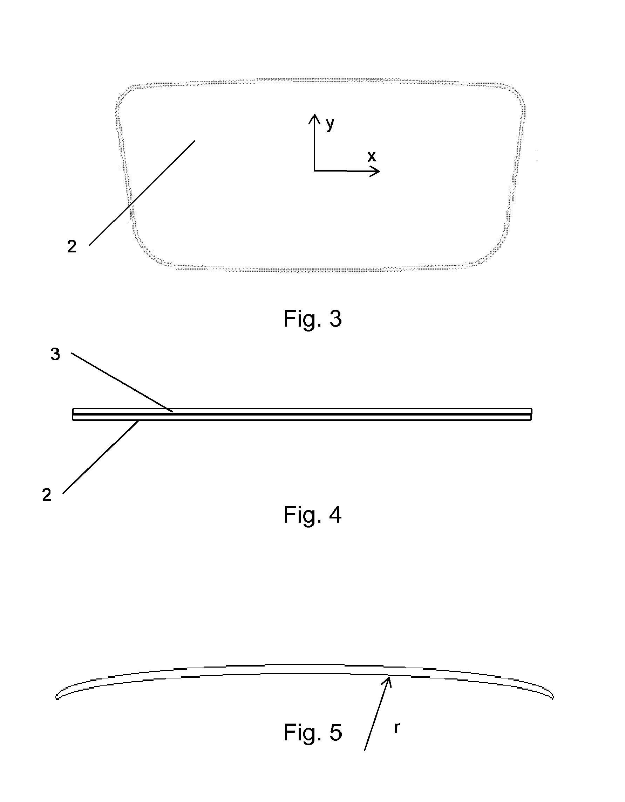

The mirror 2 proper is bonded to a plate 3 in a mirror housing (not depicted). The mirror 2 and the plate 3 are mutually adjacent and do not move relative to one another, but the plate 3 is fastened to an adjusting unit (not depicted) which in a conventional way allows relative movement between the plate (and hence the mirror 2) and the mirror housing. The function of the plate is to serve as an interface between the mirror and the adjusting unit. The plate is made of material which is weak enough to be bendable jointly with the mirror, i.e. it has to be no more rigid than the material which the mirror is made of. The plate does not appear in Figure 5. The mirror 2 may have a radius of curvature r which is different from infinity, as in Figure 5, making it possible for it to reflect a larger region than when it is flat, i.e. with an infinite radius of curvature, as in Figure 4.

The mirror 2 is made of plastic, e.g. acrylonitrile-butadiene-styrene (ABS), polycarbonate (PC) or polymethylmethacrylate (PMMA). The mirror effect is achieved by coating the front of the plastic with a reflective material which contains chrome or silver. The material for the mirror may have a flexural rigidity of between 1800 and 2800 MPa. The lower its flexural rigidity, the easier it will be to bend. What is important in choice of material for the mirror is that it can be bent by the forces exerted by the memory metal described below without disintegrating.

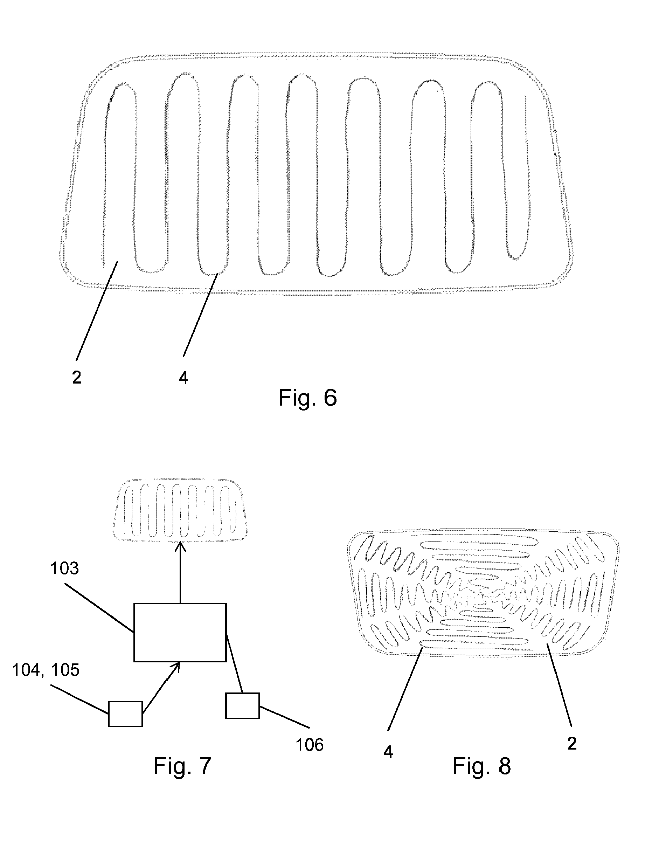

A memory metal 4 is placed between the mirror 2 and the plate 3 as illustrated in Figure 6. Memory metals are most commonly copper alloys or nickel-titanium alloys but may also take the form of iron alloys. A characteristic feature of memory metals is that they change shape with change of temperature.

The memory metal 4 is fastened to the back of the mirror 2 in such a way to create a force-transmitting connection between them. The memory metal is preferably fastened to the back of the mirror adhesively, e.g. by bonding agent or tape. Adhesive bonding or taping is an easy, quick and robust way of creating the force-transmitting connection required for achieving the desired effect on the mirror.

The memory metal 4 is arranged in a pattern which makes the desired bending possible. In Figure 6 the memory metal 4 is arranged for uniform bending of the mirror about its y-axis, see Figure 3. When the memory metal is not energised, the mirror will have a radius of curvature which differs from infinity, i.e. its front will have a convex shape. In Figure 8 the memory metal 4 is arranged for bending of the mirror 2 about both its *x* axis and its *y* axis, i.e. to a quasi-spherical shape.

The memory metal 4 is connected to the vehicle's electrical network 106 by electric lines and when current passes through the memory metal it is warmed and changes shape. In so doing, it exerts a force on the mirror 2 so that the mirror's radius of curvature r changes and the mirror's front forms a convex surface.

It is also conceivable for different parts of the mirror to have different radii of curvature, in which case the memory metal has to be arranged in different patterns to achieve them. The loops of memory metal for the different parts of the mirror may be connected to separate power supply means so that they can be controlled independently of one another. It may for example be advantageous to arrange for the portion of the mirror nearest to the vehicle to be more curved than the outer portion in order to provide visibility of as much as possible of the blind angle.

Regulating the shape of the mirror 2, i.e. the amount of current passing through the memory metal 4, may be done manually by means of a control situated on the inside of the door in the vehicle's cab 101, enabling the driver choose when to alter the mirror's radius of curvature.

The mirror's radius of curvature may also be altered automatically, in which case it is controlled by a control unit 103, see Figure 7, which according to certain criteria passes current through the memory metal and thereby alters the radius of curvature. The control unit 103 may be a separate control unit or the functions needed for the mirror may be incorporated in an existing control unit on board the vehicle.

The vehicle may be equipped with a GPS or similar system 104 which registers the vehicle's geographical location and can assess whether in the area in which it is travelling it is appropriate for the mirror to have a certain radius of curvature. It is also conceivable for the vehicle to be equipped with a camera 105 which can decide whether it is or is not on a public road. Such a camera may for example read markings beside the road or road signs to make the assessment. Corresponding signals may be sent to the control unit 103 and serve as criteria for the required control of the mirror's radius of curvature.

Another possibility is that the mirror's radius of curvature r may automatically return to a value different from infinity, i.e. a convex state, when a certain time has passed since the driver operated a control. If for example the vehicle has to be reversed into a confined space the mirror setting need only be changed for a short time, but when for example driving in a quarry it may perhaps be relevant for the mirror to be in an altered state for a longer time. The driver may then operate the control so that the mirror has for example an altered radius of curvature for 15 minutes or an hour, depending on the driving situation.

It is also conceivable for the mirror's radius of curvature r to revert to being different from infinity when the vehicle's speed exceeds a certain value, e.g. 20 km/h. If the driver then forgets to reset the mirror when the vehicle joins a public road, its radius of curvature will be adjusted to the different traffic situation shortly after the vehicle has joined the public road.

The invention proposes an easy and cost-effective way of providing a vehicle with a mirror whose radius of curvature can be altered and therefore be adapted to different driving situations. The smaller the radius of curvature, the greater will be the curvature of the mirror and the larger the field of view it can reflect. However, the more curved the mirror, the more distorted objects will become. A large curvature may nevertheless be desirable, e.g. to make it possible to see the top of a semitrailer, which cannot be seen by merely adjusting the mirror relative to its housing. Conversely, during reversing and other precision driving it may be more desirable to have as little distortion as possible of objects seen in the mirror. The fact that a mirror according to the invention can be adjusted to reflect different fields of view also affords potential for reducing the scope for movement of the mirror relative to its housing, in which case the adjusting unit may be made smaller.

The invention is of course in no way restricted to the embodiments described above, since many possibilities for modifications thereof are likely to be obvious to one skilled in the art without having therein to depart from the invention's basic concept such as is defined in the attached claims.

## Claims

1. A mirror (2) for rear view pertaining to a vehicle (100) and made of flexible material which allows the mirror (2) to assume different radii of curvature (r), and comprising means (4) for altering the radius of curvature (r), **characterised in that** the means for altering the radius of curvature (r) comprises a memory metal (4) which is fastened to the back of the mirror (2) and has a force-transmitting connection with the flexible material.

2. A mirror (2) according to claim 1, **characterised in that** the mirror (2) is made of plastic material.

3. A mirror (2) according to either of the above claims, **characterised in that** the alteration of the radius of curvature (r) of the mirror (2) is controlled manually.

4. A mirror (2) according to either of claims 1 and 2, **characterised in that** the alteration of the radius of curvature (r) of the mirror (2) is controlled automatically by a control unit (103).

5. A mirror (2) according to claim 4, **characterised in that** the control unit (103) directs the radius of curvature (r) to a certain value when the vehicle (100) travels at a speed over 20 km/h.

6. A mirror (2) according to claim 4, **characterised in that** the control unit (103) can receive signals from a GPS (104) and cause the radius of curvature (r) to assume a certain value when the vehicle (100) travels within given coordinates.

7. A mirror (2) according to any one of the foregoing claims, **characterised in that** when the memory metal (4) is not acted upon, the mirror (2) will have a radius of curvature (r) which is different from infinity.

8. A mirror (2) according to any one of the foregoing claims, **characterised in that** the memory metal (4) is situated on the visually non-translucent surface of the mirror (2) and that the mirror (2) also comprises means (106) for supplying thermal energy to the memory metal (4).

9. A mirror (2) according to claim 8, **characterised in that** thermal energy is supplied to the memory metal (4) via electric lines which form part of the electrical network (106) of the vehicle (100).

10. A mirror device (1), **characterised in that** it comprises a mirror (2) according to any one of the foregoing claims, which mirror (2) is situated on an adjusting mechanism in a mirror housing.

11. A vehicle (100), **characterised in that** it is equipped with a mirror device (1) according to claim 10.
